# EUROPÄISCHE PATENTSCHRIFT

(11) **EP 2 590 834 B1**
(45) Veröffentlichungstag und Bekanntmachung des Hinweises auf die Patenterteilung: **16.07.2014**
(21) Anmeldenummer: 11723329.6
(22) Anmeldetag: 11.05.2011
(51) Int. Cl.: B60K 25/04, B60K 25/02, B60K 17/10, F01N 5/04, F02B 37/00, F02B 37/04, F02B 41/10

(54) **VORRICHTUNG SOWIE FAHRZEUG ODER ARBEITSMASCHINE**
APPARATUS AND VEHICLE OR WORKING MACHINE
DISPOSITIF ET VÉHICULE OU MACHINE DE TRAVAIL

(30) Priorität: 07.07.2010 DE 102010031033
(43) Veröffentlichungstag der Anmeldung: 15.05.2013
(73) Patentinhaber: Robert Bosch GmbH, 70442 Stuttgart (DE)
(72) Erfinder: MEINHEIT, Hinrich, 74354 Besigheim (DE); BUCHTALA, Boris, 75417 Muehlacker (DE); FERHADBEGOVIC, Bojan, 70372 Stuttgart (DE)
(86) Internationale Anmeldenummer: PCT/EP2011/057573
(87) Internationale Veröffentlichungsnummer: WO 2012/004027

(56) Entgegenhaltungen:
- DE-A1- 4 212 984
- DE-A1-102006 010 508
- DE-A1-102008 043 221

## Beschreibung

### Stand der Technik

Die vorliegende Erfindung betrifft eine Vorrichtung für ein Fahrzeug oder eine Arbeitsmaschine sowie ein Fahrzeug oder eine Arbeitsmaschine.

Beispielsweise ist aus der Druckschrift DE 42 12 984 C2 eine Vorrichtung gemäß dem Oberbegriff des Patentanspruchs 1 bekannt.

Die aus der DE 42 12 984 C2 bekannte Vorrichtung weist eine erste Hydraulikpumpe auf, welche einen Hydrostatmotor hydraulisch antreibt. Der Hydrostatmotor wiederum treibt mittels eines Riemens mehrere Nebenaggregate an. Ferner weist die Vorrichtung eine Brennkraftmaschine auf, welche die erste Hydraulikpumpe mittels eines Triebstrangs mechanisch antreibt. Darüber hinaus ist eine zweite Hydraulikpumpe vorgesehen, welche mit der ersten Hydraulikpumpe hydraulisch gekoppelt ist. Die zweite Hydraulikpumpe wird von einem Turbolader im Abgasstrom der Brennkraftmaschine angetrieben.

### Vorteile der Erfindung

Die im Anspruch 1 definierte, erfindungsgemäße Vorrichtung sowie das im Anspruch 10 definierte, erfindungsgemäße Fahrzeug oder die im Anspruch 10 definierte, erfindungsgemäße Arbeitsmaschine bieten gegenüber herkömmlichen Lösungen den Vorteil, dass dadurch, dass der Verbraucher ausgangsseitig direkt mit einem Tank verbunden ist, ein nur geringer Regelungsaufwand zum Regeln der ersten Hydraulikpumpe anfällt. Denn eine Abstimmung zwischen der ersten und zweiten Hydraulikpumpe hinsichtlich der von diesen jeweils geförderten Hydraulikflüssigkeitsvolumina kann bei der erfindungsgemäßen Lösung weitgehend entfallen. Beispielsweise könnte die erste Hydraulikpumpe sogar mit einem konstanten Schluckvolumen vorgesehen werden.

Damit, dass der "Verbraucher ausgangsseitig direkt mit einem Tank verbunden ist" ist vorliegend gemeint, dass die erste Hydraulikpumpe mit dem Verbraucher im offenen Kreis betrieben wird.

Die in den jeweiligen Unteransprüchen aufgeführten Merkmale beziehen sich auf vorteilhafte Weiterbildungen und Verbesserungen des Gegenstands der Erfindung.

Gemäß einer bevorzugten Weiterbildung der erfindungsgemäßen Vorrichtung ist ein Rückschlagventil zwischen der ersten und zweiten Hydraulikpumpe angeordnet. Einerseits schwingt die zweite Hydraulikpumpe aufgrund des variierenden Abgasstroms der Brennkraftmaschine, was in einem entsprechenden Schwingen der von der zweiten Hydraulikpumpe geförderten Hydraulikflüssigkeit resultiert. Andererseits schwingt die erste Hydraulikpumpe aufgrund von Drehzahländerungen der Brennkraftmaschine, was wiederum in einem Schwingen der von der ersten Hydraulikpumpe geförderten Hydraulikflüssigkeit resultiert. Mittels des Rückschlagventils wird vorteilhaft eine Schwingungsentkopplung zwischen der ersten und zweiten Hydraulikpumpe gewährleistet.

### Kurze Beschreibung der Zeichnungen

Ausführungsbeispiele der Erfindung sind in der Zeichnung dargestellt und in der nachfolgenden Beschreibung näher erläutert.

Es zeigen:
- Fig. 1: schematisch eine Vorrichtung gemäß einem Ausführungsbeispiel der vorliegenden Erfindung;
- Fig. 2: eine Variation der Vorrichtung gemäß Fig. 1; und
- Fig. 3: eine Vorrichtung gemäß einem weiteren Ausführungsbeispiel der vorliegenden Erfindung.

### Beschreibung von Ausführungsbeispielen

In den Figuren bezeichnen gleiche Bezugsziffern gleiche oder funktionsgleiche Elemente, soweit nichts Gegenteiliges angegeben ist.

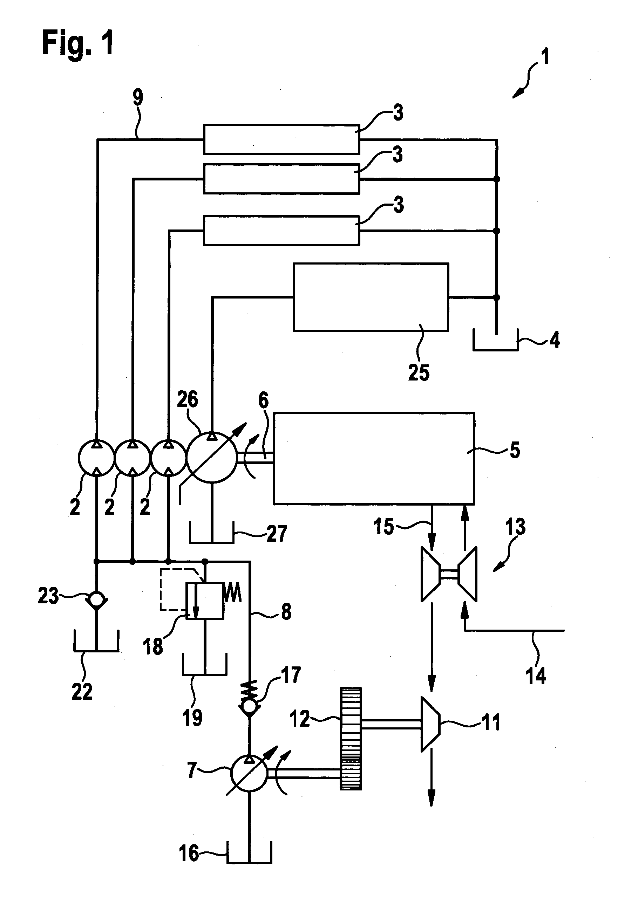

Fig. 1 zeigt eine Vorrichtung 1 gemäß einem Ausführungsbeispiel der vorliegenden Erfindung.

Die Vorrichtung 1 kann beispielsweise in einem Fahrzeug, insbesondere einem Kraftfahrzeug, oder einer Arbeitsmaschine, beispielsweise einem Bagger, einem Traktor oder einem Mähdrescher, integriert sein.

Die Vorrichtung 1 weist mehrere erste Hydraulikpumpen 2 auf. Bevorzugt weisen die ersten Hydraulikpumpen 2 ein konstantes Schluckvolumen auf. Die ersten Hydraulikpumpen 2 (diese werden auch als Nebenpumpen bezeichnet) treiben jeweils einen Nebenverbraucher 3 mittels Hydraulikleitungen 9 hydraulisch an.

Die in den Fig. 1-3 gezeigten durchgezogenen Linien deuten Hydraulikleitungen an. Lediglich beispielhaft sind zwei der Hydraulikleitungen mit den Bezugszeichen 8 bzw. 9 bezeichnet.

Ein Nebenverbraucher 3 weist typischerweise einen nicht dargestellten Hydraulikmotor zum mechanischen Antreiben verschiedener Nebenaggregate, wie z.B. eines Generators, einer Kühlmittelpumpe, eines Druckluftkompressors und/oder eines Klimakompressors auf. Auch kann der nicht dargestellte Hydraulikmotor einen Lüfter zur Kühlung der Motorkühlflüssigkeit und des Hydrauliköls antreiben, sowie eine oder mehrer Speisepumpen, beispielsweise für die Ventilansteuerung der Arbeitshydraulik. Auch die von dem Hydraulikmotor angetriebenen Komponenten sind in Fig. 1 nicht dargestellt.

Wie ferner aus Fig. 1 zu entnehmen, sind die Nebenverbraucher 3 jeweils ausgangsseitig direkt mit einem Tank 4 verbunden. Das heißt, dass die ersten Hydraulikpumpen 2 die Nebenverbraucher 3 im offenen Kreis mit Hydraulikflüssigkeit versorgen.

Darüber hinaus weist die Vorrichtung 1 eine Brennkraftmaschine 5 auf. Die Brennkraftmaschine 5 umfasst eine Welle 6, mit welcher sie die ersten Hydraulikpumpen 2 insbesondere direkt mechanisch antreibt.

Die Vorrichtung 1 weist ferner eine zweite Hydraulikpumpe 7 auf. Die zweite Hydraulikpumpe 7 kann ein einstellbares Schluckvolumen aufweisen. Ferner kann es sich bei der zweiten Hydraulikpumpe 7 um eine druckgeregelte oder leistungsgeregelte Pumpe handeln. Die Verwendung einer Elektrohydraulik zum Steuern der zweiten Hydraulikpumpe 7 ist aufgrund des geringen erforderlichen Regelungsaufwands bevorzugt nicht erforderlich.

Die zweite Hydraulikpumpe 7 wird von einer Turbocompoundturbine 11 mittels eines Getriebes 12 angetrieben. Die Turbocompoundturbine 11 ist dabei einem Turbolader 13 beispielsweise nachgeschaltet, welcher Ansaugluft 14 der Brennkraftmaschine 5 zuführt und diese dadurch lädt. Der Turbolader 13 wird selbst wiederum von dem Abgasstrom 15 der Brennkraftmaschine 5 angetrieben. Der Abgasstrom 15 durchfließt zunächst den Turbolader 13 und hiernach die Turbocompoundturbine 11.

Anstelle der nachgeschalteten Anordnung der Turbocompoundturbine 11 könnte diese auch alleine, d.h. ohne den Turbolader 13, verwendet werden. Weiterhin kann die Turbocompoundturbine 11 auch parallel zu dem Turbolader 13 oder diesem vorgeschaltet vorgesehen sein.

Die Turbocompoundturbine 11 bildet also vorliegend eine Einrichtung aus, welche unter Ausnutzung der Energie im Abgasstrom 15 der Brennkraftmaschine 5 die zweite Hydraulikpumpe 7 antreibt. Die zweite Hydraulikpumpe 7 kann somit effizient betrieben werden.

Die zweite Hydraulikpumpe 7 pumpt mittels der Hydraulikleitung 8 Hydraulikflüssigkeit aus einem Tank 16 durch ein Rückschlagventil 17 zur Saugseite der ersten Hydraulikpumpen 2. Um hier einem etwaigen Überdruck vorzubeugen, welcher zu einer Beschädigung der Vorrichtung 1 führen könnte, ist ein Druckbegrenzungsventil 18 samt einem Tank 19 zwischen dem Rückschlagventil 17 und der Saugseite der ersten Hydraulikpumpen 2 vorgesehen.

Die ersten Hydraulikpumpen 2 sind weiterhin saugseitig mit einem Tank 22 mittels eines Rückschlagventils 23 verbunden.

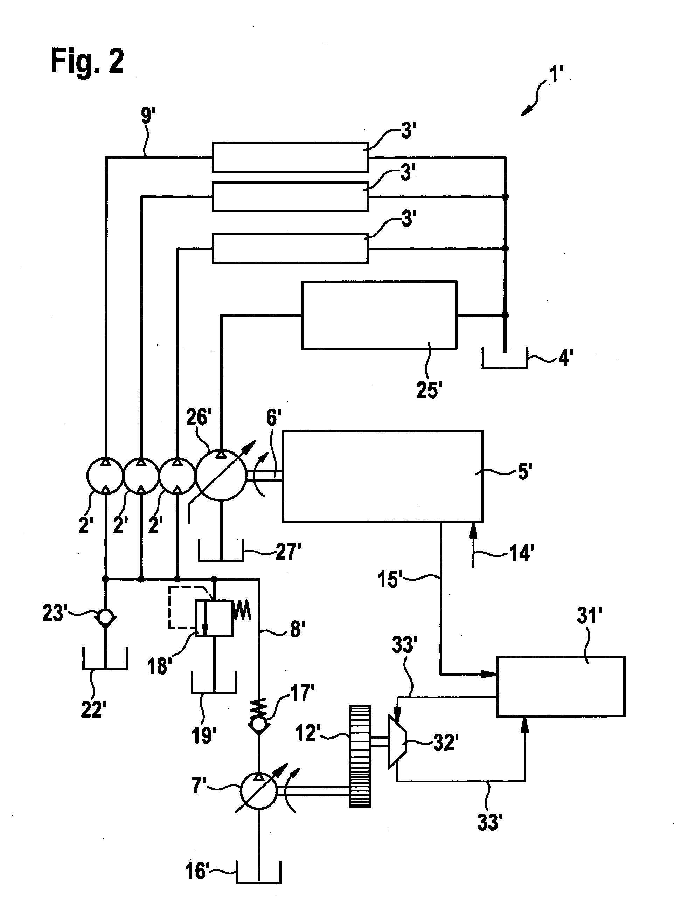

Die Vorrichtung 1 weist weiterhin einen Hauptverbraucher 25 auf. Bei dem Hauptverbraucher 25 handelt es sich insbesondere um eine Arbeitshydraulik, insbesondere einen oder mehrere Hydraulikzylinder der Arbeitsmaschine oder einen oder mehrere Hydraulikmotoren zum Antreiben des Fahrzeugs. Der Übersichtlichkeit halber ist vorliegend weder der Hydraulikzylinder noch der Hydraulikmotor in den Figuren 1 und 2 dargestellt.

Die Vorrichtung 1 weist weiterhin eine dritte Hydraulikpumpe 26 (diese wird auch als Hauptpumpe bezeichnet), welche mittels der Welle 6 von der Brennkraftmaschine 5 mechanisch angetrieben wird.

Die dritte Hydraulikpumpe 26 ist vorzugsweise mit einem einstellbaren Schluckvolumen ausgebildet.

Die dritte Hydraulikpumpe 26 fördert Hydraulikflüssigkeit von einem Tank 27 zu dem Hauptverbraucher 25 und treibt diesen dadurch an. Der Hauptverbraucher 25 ist ausgangsseitig direkt mit dem Tank 4 verbunden.

Nachfolgend wird kurz die Funktionsweise der Vorrichtung 1 näher erläutert:

Die zweite Hydraulikpumpe 7 hebt den Druck der Hydraulikflüssigkeit, bei welcher es sich beispielsweise um ein Hydrauliköl handelt, auf der Saugseite der ersten Hydraulikpumpen 2 an. Dadurch verringert sich die von der Brennkraftmaschine 5 mittels der Welle 6 zugeführte mechanische Leistung, welche notwendig ist, um die ersten Hydraulikpumpen 2 anzutreiben. Die Brennkraftmaschine 5 wird folglich entlastet.

Wird plötzlich mehr Leistung von der Brennkraftmaschine 5 abgefragt, indem dieser mehr Kraftstoff zugeführt wird, erhöht sich die Energie in dem Abgasstrom 15 merklich, ohne dass dies sogleich in einer höheren Drehzahl der Welle 6 und damit in einer höheren Pumpleistung der ersten Hydraulikpumpen 2 resultiert. Die höhere Energie in dem Abgasstrom 15 führt dazu, dass die zweite Hydraulikpumpe 7 mehr Leistung aufnimmt und dadurch ein höheres Hydraulikflüssigkeitsvolumen an der Saugseite der ersten Hydraulikpumpen 2 bereitstellt. Im Idealfall kann dies dazu führen, dass der saugseitige Druck der ersten Hydraulikpumpen 2 deren druckseitigem Druck - dem Verbraucherdruck - entspricht, so dass die ersten Hydraulikpumpen 2 praktisch keinerlei Leistung von der Brennkraftmaschine 5 mittels der Welle 6 abnehmen. Da in diesem Fall keinerlei Leckageverluste an den ersten Hydraulikpumpen 2 auftreten, ist der Wirkungsgrad der Vorrichtung 1 in diesem Fall besonders hoch. Der Druck in der Saugseite der ersten Hydraulikpumpen 2 kann auch größer werden als der Verbraucherdruck, wobei die ersten Hydraulikpumpen 2 dann in den motorischen Betrieb übergehen und die Brennkraftmaschine entlasten.

Wird der Druck an der Saugseite der ersten Hydraulikpumpen 2, das heißt also in der Hydraulikleitung 8, zu hoch, kann die zweite Hydraulikpumpe 7 zurückgeschwenkt werden und/oder ein Volumenstrom über das Druckbegrenzungsventil 18 in den Tank 19 abgeführt werden, so dass der Druck in der Leitung 8 sinkt.

In dem umgekehrten Fall, dass von der Brennkraftmaschine 5 plötzlich weniger Leistung abgefragt wird, und dieser daher weniger Kraftstoff zugeführt wird, sinkt die Energie in dem Abgasstrom 15 plötzlich ab, während die mittels der Welle 6 an die ersten Hydraulikpumpen 2 abgegebene Leistung der Brennkraftmaschine 5 noch im Wesentlichen konstant bleibt. Dies führt dann dazu, dass das an der Saugseite der ersten Hydraulikpumpen 2 mittels der zweiten Hydraulikpumpe 7 bereitgestellte Hydraulikflüssigkeitsvolumen nicht ausreicht, um das von den ersten Hydraulikpumpen 2 angesaugte Hydraulikflüssigkeitsvolumen zu decken. In diesem Fall öffnet das Rückschlagventil 23 und die ersten Hydraulikpumpen 2 können somit zusätzlich Hydraulikflüssigkeit aus dem Tank 22 aufnehmen.

Wird die zweite Hydraulikpumpe 7 als eine Schwenkpumpe, d.h. eine Pumpe mit einstellbarem Schluckvolumen, ausgeführt, ergibt sich die Möglichkeit einer Drehzahlregelung der Turbocompoundturbine 11, so dass diese im Bestpunkt ihres Wirkungsgradkennfeldes betrieben werden kann. Der Turbinenwirkungsgrad ist abhängig vom Verhältnis der Drücke vor und nach der Turbocompoundturbine 11 sowie vom Massenstrom und der Turbinendrehzahl. Da die Turbocompoundturbine 11 das Leistungsgleichgewicht anstrebt, kann sie durch eine Reduktion des Schwenkwinkels der zweiten Hydraulikpumpe 7 und des damit reduzierten Schluckvolumens dieser beschleunigt werden, weil dadurch das Gegenmoment sinkt.

Das Rückschlagventil 17 sorgt vorteilhaft für die bereits vorstehend beschriebene schwingungstechnische Entkopplung zwischen den ersten Hydraulikpumpen 2 und der zweiten Hydraulikpumpe 7.

Fig. 2 zeigt eine mögliche Variante der Vorrichtung 1 und ist mit 1' bezeichnet. Nachfolgend wird lediglich auf die Unterschiede zwischen der Vorrichtung 1' und der Vorrichtung 1 eingegangen.

Anstelle des Turboladers 13 und der Turbocompoundturbine 11 gemäß Fig. 1 weist die Vorrichtung 1' einen Wärmetauscher 31' und eine Dampfturbine 32' auf. In dem Wärmetauscher 31' wird mittels der in dem Abgasstrom 15' enthaltenen Energie Dampf 33' zum Antreiben der Dampfturbine 32' erzeugt. Die Dampfturbine 32' treibt wiederum mittels des Getriebes 12' die zweite Hydraulikpumpe 7' an.

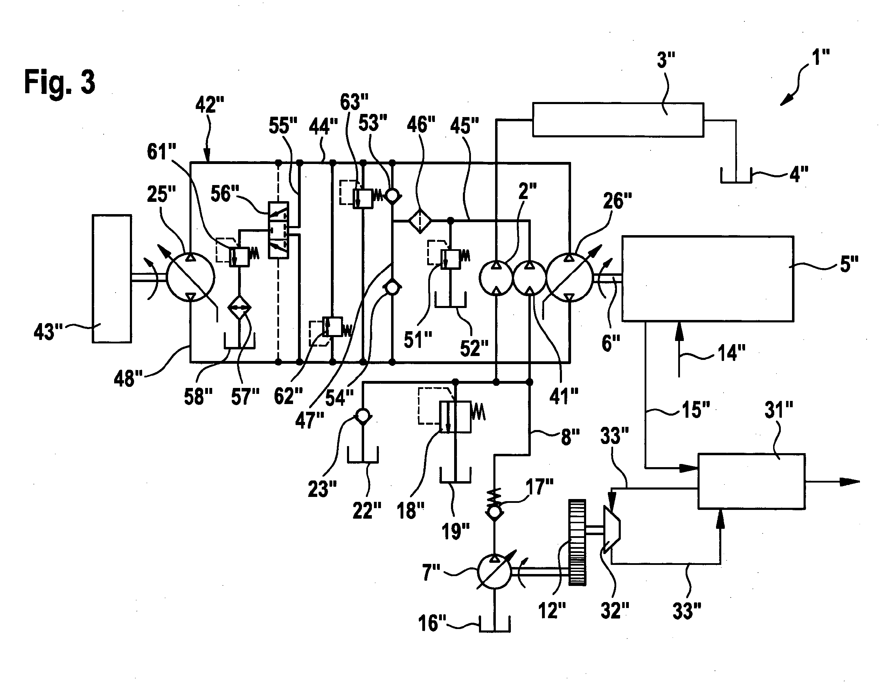

Fig. 3 zeigt schematisch eine Vorrichtung 1" gemäß einem weiteren Ausführungsbeispiel der vorliegenden Erfindung.

Es ist angedacht, die Vorrichtung 1" typischerweise bei einer mobilen Arbeitsmaschine, beispielsweise einem Traktor, einzusetzen.

Die Vorrichtung 1" unterscheidet sich von der Vorrichtung 1' aus Fig. 2 wie folgt:

Die Vorrichtung 1" weist lediglich eine erste Hydraulikpumpe 2" auf. Selbstverständlich könnten jedoch auch mehrere erste Hydraulikpumpen 2" vorgesehen sein.

Zusätzlich zu der ersten Hydraulikpumpe 2" ist eine vierte Hydraulikpumpe 41" vorgesehen. Die vierte Hydraulikpumpe 41" ist saugseitig mittels der Hydraulikleitung 8" und dem Rückschlagventil 17" mit der zweiten Hydraulikpumpe 7" verbunden. Bei der vierten Hydraulikpumpe 41" handelt es sich um eine Speisepumpe, welche einen geschlossenen Hydraulikkreislauf 42" mit Hydraulikflüssigkeit versorgt.

In dem geschlossenen Hydraulikkreislauf 42" wird Hydraulikflüssigkeit mittels der dritten Hydraulikpumpe 26" durch einen als Hydraulikmotor ausgebildeten Hauptverbraucher 25" gepumpt.

Der Hauptverbraucher 25" treibt beispielsweise ein Rad 43" des Traktors an. Dazu weist der geschlossene Hydraulikkreislauf 42" die dritte Hydraulikpumpe 26" mit dem Hauptverbraucher 25" verbindende Hydraulikleitungen 44" und 48" auf.

Die vierte Hydraulikpumpe 41" ist druckseitig mittels einer Hydraulikleitung 45" und eines Filters 46" mit einer Hydraulikleitung 47" verbunden.

Ein mit der Hydraulikleitung 45" verbundenes Druckbegrenzungsventil 51" begrenzt den Druck in der Hydraulikleitung 45". Bei einem Überdruck in der Hydraulikleitung 45" wird Hydraulikflüssigkeit in einen Tank 52" mittels des Druckbegrenzungsventils 51" abgeführt.

Die Hydraulikleitung 47" ist an ihren beiden Enden jeweils mit einem Rückschlagventil 53" und 54" mit der Hydraulikleitung 44" bzw. 48" des Hydraulikkreislaufs 42" verbunden.

Die Hydraulikleitung 44" stellt je nach Drehrichtung des Hauptverbrauchers 25" eine Zuführ- oder Abführleitung für die Hydraulikflüssigkeit dar. Fungiert die Hydraulikleitung 44" beispielsweise als Zuführleitung, dann bildet die Hydraulikleitung 48" eine entsprechende Abführleitung und umgekehrt.

Im Betrieb des Hauptverbrauchers 25" wird an dessen Abführseite, beispielsweise gebildet durch die Hydraulikleitung 44", ein Teil der Hydraulikflüssigkeit mittels der Hydraulikleitung 55" und einer Hydraulikschaltung 56" durch einen Kühler 57" in einen Tank 58" abgeführt. Zwischen dem Kühler 57" und der Hydraulikschaltung 56" kann ein weiteres Druckbegrenzungsventil 61" angeordnet sein.

Die abgeführte Hydraulikflüssigkeit wird mittels der von der vierten Hydraulikpumpe 41" nachgeführten Hydraulikflüssigkeit ersetzt. Dazu fließt die Hydraulikflüssigkeit im vorliegenden Fall aus der Hydraulikleitung 47" durch das Rückschlagventil 53" in die Abführleitung 44".

Somit kann eine Filtration und Kühlung der in dem Hydraulikkreislauf 42" fließenden Hydraulikflüssigkeit sichergestellt werden. Auch werden mittels der Hydraulikpumpe 41" die in der Hydraulikpumpe 26" und dem Hydraulikmotor 25" entstehenden Leckageverluste ausgeglichen.

Ferner kann ein Druckbegrenzungsventil 62" vorgesehen sein, welches bei einem Überdruck ein Fließen von Hydraulikflüssigkeit von der Hydraulikleitung 48" zu der Hydraulikleitung 44" ermöglicht. Weiterhin kann ein Druckbegrenzungsventil 63" vorgesehen sein, welches das Fließen der Hydraulikflüssigkeit von der Hydraulikleitung 44' zu der Hydraulikleitung 48" bei einem Überdruck erlaubt.

Anstelle des Wärmetauschers 31" und der Dampfturbine 32" könnte bei der Vorrichtung 1" gemäß Fig. 3 auch der Turbolader 13 mit der Turbocompoundturbine 11 aus Fig. 1 verwendet werden.

Obwohl die Erfindung anhand von Ausführungsbeispielen vorliegend konkret beschrieben wurde, ist sie darauf nicht beschränkt, sondern auf vielfältige Art und Weise modifizierbar. Insbesondere sind die für die erfindungsgemäße Vorrichtung beschriebenen Weiterbildungen und Ausführungsbeispiele auf das erfindungsgemäße Fahrzeug und auf die erfindungsgemäße Arbeitsmaschine entsprechend anwendbar. Ferner sei darauf hingewiesen, dass "ein" vorliegend keine Vielzahl ausschließt.

Bei den vorstehend erwähnten Hydraulikpumpen mit konstantem Schluckvolumen handelt es sich vorzugsweise um Zahnradpumpen. Die Verstellpumpen sind vorzugsweise Schrägscheibenpumpen bzw. Schrägachsenpumpen. Das Gleiche gilt für die vorstehend erwähnten Hydraulikmotoren.

Insbesondere die ersten Hydraulikpumpen 2 sind auch als Hydraulikmotoren betreibbar. Dies insbesondere in dem Fall, dass der mittels der zweiten Hydraulikpumpe 7 bereitgestellte Hydraulikdruck den Hydraulikdruck an der Druckseite der ersten Hydraulikpumpen 2 übersteigt.

## Patentansprüche

1. Vorrichtung (1; 1'; 1 ") für ein Fahrzeug oder eine Arbeitsmaschine, aufweisend:
eine erste Hydraulikpumpe (2; 2'; 2"), welche einen Verbraucher (3; 3'; 3") hydraulisch antreibt und die von einer
Brennkraftmaschine (5; 5'; 5") mechanisch angetrieben wird;
eine zweite Hydraulikpumpe (7; 7'; 7"), welche mit der ersten Hydraulikpumpe (2; 2'; 2") hydraulisch gekoppelt ist; und
eine Einrichtung (11; 32'; 32"), welche unter Ausnutzung der Energie im Abgasstrom (15; 15'; 15") der Brennkraftmaschine (5; 5'; 5") die zweite Hydraulikpumpe (7; 7'; 7") antreibt;
**dadurch gekennzeichnet,**
**dass** der Verbraucher (3; 3'; 3") ausgangsseitig direkt mit einem Tank (4; 4'; 4") verbunden ist.

2. Vorrichtung nach Anspruch 1, wobei ein Rückschlagventil (17; 17'; 17") zwischen der ersten und zweiten Hydraulikpumpe (2; 2'; 2"; 7; 7'; 7") angeordnet ist.

3. Vorrichtung nach Anspruch 1 oder 2, wobei der Verbraucher (3; 3'; 3") ein Nebenverbraucher ist und einen Hydraulikmotor zum mechanischen Antreiben eines Generators, einer Kühlmittelpumpe, eines Druckluftkompressors und/oder eines Klimakompressors aufweist.

4. Vorrichtung nach einem der vorhergehenden Ansprüche, wobei ein Hauptverbraucher (25; 25'; 25") und eine dritte Hydraulikpumpe (26; 26'; 26"), welche den Hauptverbraucher (25; 25'; 25") hydraulisch antreibt, vorgesehen sind und die Brennkraftmaschine (5; 5'; 5") die dritte Hydraulikpumpe (26; 26'; 26") mechanisch antreibt.

5. Vorrichtung nach Anspruch 4, wobei der Hauptverbraucher (25; 25'; 25") eine Arbeitshydraulik, insbesondere einen Hydraulikzylinder der Arbeitsmaschine und/oder einen Hydraulikmotor zum Antreiben des Fahrzeugs, aufweist.

6. Vorrichtung nach Anspruch 4 oder 5, wobei die zweite Hydraulikpumpe (7") ferner mit einer vierten Hydraulikpumpe (41 ") gekoppelt ist, welche den die dritte Hydraulikpumpe (26") mit dem Hauptverbraucher (25") bildenden Hydraulikkreislauf (42") speist.

7. Vorrichtung nach einem der vorhergehenden Ansprüche, wobei die Einrichtung eine Turbocompoundturbine (11) aufweist, welche mit der zweiten Hydraulikpumpe (7) mechanisch für ein Antreiben derselben gekoppelt ist.

8. Vorrichtung nach einem der Ansprüche 1 bis 6, wobei die Einrichtung eine Dampfturbine (32'; 32") aufweist, welche mit der zweiten Hydraulikpumpe (7'; 7") mechanisch für ein Antreiben derselben gekoppelt ist.

9. Vorrichtung nach einem der vorhergehenden Ansprüche, wobei die erste, zweite, dritte und/oder vierte Hydraulikpumpe (2; 2'; 2"; 7; 7'; 7"; 26; 26'; 26"; 41 ") auch als Hydraulikmotor betreibbar ist.

10. Fahrzeug oder Arbeitsmaschine, mit einer Vorrichtung (1; 1'; 1") nach einem der vorhergehenden Ansprüche.

## Claims

1. Device (1; 1'; 1") for a vehicle or a work machine, having:
a first hydraulic pump (2; 2'; 2") which hydraulically drives a consumer (3; 3'; 3") and which is mechanically driven by an
internal combustion engine (5; 5'; 5");
a second hydraulic pump (7; 7'; 7") which is hydraulically coupled to the first hydraulic pump (2; 2'; 2"); and
a device (11; 32'; 32") which drives the second hydraulic pump (7; 7'; 7") using the energy in the exhaust-gas stream (15; 15'; 15") from the internal combustion engine (5; 5'; 5");
**characterized**
**in that** the consumer (3; 3'; 3") is connected at the outlet side directly to a tank (4; 4'; 4").

2. Device according to Claim 1, wherein a check valve (17; 17'; 17") is arranged between the first and second hydraulic pumps (2; 2'; 2"; 7; 7'; 7").

3. Device according to Claim 1 or 2, wherein the consumer (3; 3'; 3") is an auxiliary consumer and has a hydraulic motor for mechanically driving a generator, a coolant pump, a compressed-air compressor and/or an air-conditioning compressor.

4. Device according to one of the preceding claims, wherein a main consumer (25; 25'; 25") and a third hydraulic pump (26; 26'; 26") are provided, which hydraulic pump hydraulically drives the main consumer (25; 25'; 25"), and the internal combustion engine (5; 5'; 5") mechanically drives the third hydraulic pump (26; 26'; 26").

5. Device according to Claim 4, wherein the main consumer (25; 25'; 25") has working hydraulics, in particular a hydraulic cylinder of the work machine and/or a hydraulic motor for driving the vehicle.

6. Device according to Claim 4 or 5, wherein the second hydraulic pump (7") is also coupled to a fourth hydraulic pump (41") which provides a feed to the hydraulic circuit (42") formed by the third hydraulic pump (26") with the main consumer (25").

7. Device according to one of the preceding claims, wherein the device has a turbocompound turbine (11) which is mechanically coupled to the second hydraulic pump (7) in order to drive the latter.

8. Device according to one of Claims 1 to 6, wherein the device has a steam turbine (32'; 32") which is mechanically coupled to the second hydraulic pump (7'; 7") in order to drive the latter.

9. Device according to one of the preceding claims, wherein the first, second, third and/or fourth hydraulic pump (2; 2'; 2"; 7; 7'; 7"; 26; 26'; 26"; 41") are/is also operable as a hydraulic motor.

10. Vehicle or work machine having a device (1; 1'; 1") according to one of the preceding claims.

## Revendications

1. Dispositif (1 ; 1'; 1") pour un véhicule ou une machine de travail, comprenant :
une première pompe hydraulique (2 ; 2' ; 2"), laquelle entraîne hydrauliquement un consommateur (3 ; 3' ; 3") et
est entraînée mécaniquement par un moteur à combustion interne (5 ; 5' ; 5") ;
une deuxième pompe hydraulique (7 ; 7' ; 7"), laquelle est accouplée hydrauliquement à la première pompe hydraulique (2 ; 2' ; 2") ; et
un équipement (11 ; 32'; 32"), lequel entraîne la deuxième pompe hydraulique (7 ; 7' ; 7") en utilisant l'énergie du flux de gaz d'échappement (15 ; 15' ; 15") du moteur à combustion interne (5 ; 5' ; 5") ;
**caractérisé en ce que**
le consommateur (3 ; 3' ; 3") est relié directement à un réservoir (4 ; 4' ; 4") côté sortie.

2. Dispositif selon la revendication 1, dans lequel une soupape de non-retour (17 ; 17' ; 17") est disposée entre la première et la deuxième pompe hydraulique (2 ; 2' ; 2" ; 7 ; 7' ; 7").

3. Dispositif selon la revendication 1 ou 2, dans lequel le consommateur (3 ; 3' ; 3") est un consommateur auxiliaire et comprend un moteur hydraulique pour entraîner mécaniquement un générateur, une pompe à réfrigérant, un compresseur à air comprimé et/ou un compresseur de climatiseur.

4. Dispositif selon l'une quelconque des revendications précédentes, dans lequel un consommateur principal (25 ; 25' ; 25") et une troisième pompe hydraulique (26 ; 26' ; 26"), laquelle entraîne hydrauliquement le consommateur principal (25 ; 25' ; 25"), sont prévus, et le moteur à combustion interne (5 ; 5' ; 5") entraîne mécaniquement la troisième pompe hydraulique (26 ; 26' ; 26").

5. Dispositif selon la revendication 4, dans lequel le consommateur principal (25 ; 25' ; 25") comprend un système hydraulique de travail, en particulier un vérin hydraulique de la machine de travail et/ou un moteur hydraulique pour entraîner le véhicule.

6. Dispositif selon la revendication 4 ou 5, dans lequel la deuxième pompe hydraulique (7") est en outre accouplée à une quatrième pompe hydraulique (41"), laquelle alimente le circuit hydraulique (42") formant la troisième pompe hydraulique (26") avec le consommateur principal (25").

7. Dispositif selon l'une quelconque des revendications précédentes, dans lequel le dispositif comprend une turbine de turbo-compound (11), laquelle est accouplée mécaniquement avec la deuxième pompe hydraulique (7) en vue d'un entraînement de celle-ci.

8. Dispositif selon l'une quelconque des revendications 1 à 6, dans lequel l'équipement comprend une turbine à vapeur (32'; 32"), laquelle est accouplée mécaniquement avec la deuxième pompe hydraulique (7' ; 7") en vue d'un entraînement de celle-ci.

9. Dispositif selon l'une quelconque des revendications précédentes, dans lequel la première, la deuxième, la troisième et/ou la quatrième pompe hydraulique (2 ; 2' ; 2" ; 7 ; 7' ; 7" ; 26 ; 26' ; 26" ; 41") peu(ven)t également fonctionner en tant que moteur(s) hydraulique(s).

10. Véhicule ou machine de travail, comprenant un dispositif (1 ; 1' ; 1" ) selon l'une quelconque des revendications précédentes.
